# EUROPÄISCHE PATENTSCHRIFT

(11) **EP 1 011 913 B1**
(45) Veröffentlichungstag und Bekanntmachung des Hinweises auf die Patenterteilung: **23.01.2002**
(21) Anmeldenummer: 98942653.1
(22) Anmeldetag: 29.07.1998
(51) Int. Cl.: B23P 15/14, B21D 53/28, F16H 55/12

(54) **BAUTEIL, BESTEHEND AUS MEHREREN FLACHMATERIALLAGEN UND VERFAHREN ZU SEINER HERSTELLUNG**
MEMBER COMPRISING SEVERAL LAYERS OF A FLAT MATERIAL AND METHOD FOR MAKING THE SAME
ELEMENT CONSISTANT EN PLUSIEURS COUCHES DE MATERIAU PLAT ET PROCEDE PERMETTANT DE LE PRODUIRE

(30) Priorität: 13.09.1997 DE 19740286
(43) Veröffentlichungstag der Anmeldung: 28.06.2000
(73) Patentinhaber: Volkswagen Aktiengesellschaft, 38444 Wolfsburg (DE)
(72) Erfinder: BEIER, Alfred, D-38108 Braunschweig (DE); DISTLER, Dietrich, D-38436 Wolfsburg (DE)
(86) Internationale Anmeldenummer: EP9804744
(87) Internationale Veröffentlichungsnummer: WO9914012

(56) Entgegenhaltungen:
- EP-A- 0 611 615
- EP-A- 0 629 034
- DE-A- 3 026 685
- DE-A- 3 841 205
- DE-A- 4 423 107
- PATENT ABSTRACTS OF JAPAN vol. 10, no. 61 (E-387), 10. März 1986 -& JP 60 213236 A (TOSHIBA KK), 25. Oktober 1985
- PATENT ABSTRACTS OF JAPAN vol. 15, no. 417 (E-1125), 23. Oktober 1991 -& JP 03 173328 A (SHIBAURA ENG WORKS CO LTD), 26. Juli 1991
- PATENT ABSTRACTS OF JAPAN vol. 5, no. 78 (E-058), 22. Mai 1981 -& JP 56 025355 A (TOSHIBA CORP), 11. März 1981

## Beschreibung

Die Erfindung betrifft einen Steuernocken bzw. ein Zahnrad, bestehend aus mehreren ausgestanzten oder feingeschnittenen und sandwichartig aufeinandergelegten Flachmateriallagen, wie jeweils im Oberbegriff des Patentanspruches 1 bzw. 14 angegeben. Die Erfindung betrifft ferner ein jeweiliges Verfahren zu deren Herstellung gemäß Patentanspruch 9 bzw. 24.

Ein aus mehreren ausgestanzten oder feingeschnittenen und sandwichartig aufeinandergelegten Flachmateriallagen bestehendes Pleuel für eine Hubkolben-Brennkraftmaschine ist beispielsweise in DE 3841205 C2 offenbart.

Ein aus mehreren flach aufeinandergelegten, lamellenartigen Flachmateriallagen bestehendes Außenzahnrad ist in DE 3026685 A1 offenbart, wobei jede einzelne Flachmateriallage mehrere Öffnungen aufweist, von denen einige zur Aufnahme von Nieten vorgesehen sind, um somit einen Zusammenhalt der einzelnen Lagen zu gewährleisten.

Ein aus mehreren miteinander verbundenen Flachmateriallagen bestehender Steuemocken ist beispielsweise aus DE 4423107 A1 bekannt.

Den vorgenannten, bekannten Zahnrädern bzw. Steuernocken ist somit gemeinsam, daß die einzelnen Flachmateriallagen durch Stanzen oder Feinschneiden bereitgestellt werden. Nachteilig hierbei kann der relativ hohe Anteil von Verschnitt sein, wobei dieser Nachteil um so gravierender ist, je größer die verwendeten Materialstärken bzw. Materialgüten der Flachmateriallagen sind.

Der Erfindung liegt die Aufgabe zugrunde, einen gattungsgemäßen Steuemocken bzw. ein gattungsgemäßes Zahnrad bereitzustellen, welches einen gegenüber herkömmlichen Steuemocken bzw. Zahnrädern verringerten Werkstoffeinsatz ermöglicht. Desweiteren soll ein Verfahren zu deren jeweiliger Herstellung angegeben werden.

Die Lösung dieser Aufgabe gelingt für einen Steuernocken mit den Merkmalen des Patentanspruches 1, für ein Zahnrad mit den Merkmalen des Patentanspruches 14 und für die jeweiligen Verfahren mit den Merkmalen des Patentanspruches 9 bzw. 24. Vorteilhafte Ausgestaltungen der Erfindung sind in den jeweiligen abhängigen Ansprüchen angegeben.

Erfindungsgemäß ist vorgesehen, daß die einzelnen, in ihrer Gesamtheit den Steuemocken bzw. das Zahnrad bildenden Flachmateriallagen mehrteilig ausgebildet sind, mit in Richtung der Materiallagenebenen verlaufenden Trennfugen, wobei zumindest einige dieser Trennfugen benachbarter Flachmateriallagen zueinander versetzt angeordnet sind. Vorteilhafterweise wird somit jede einzelne Flachmateriallage in zumindest 2 Segmente zerlegt, was eine materialsparende Anordnung der einzelnen Segmente auf einem einer Stanze zugeführten Materialband ermöglicht. Um weiterhin die Festigkeit des durch die Segmentierung der einzelnen Flachmateriallagen in eine größere Anzahl von Einzelteilen zerlegten Steuemockens bzw. Zahnrades zu gewährleisten, werden abschließend die einzelnen Segmente zu den Flachmateriallagenzusammengelegt, wobei die zwischen den einzelnen Segmenten verlaufenden Trennfugen einer Flachmateriallage versetzt zu der oder den Trennfugen anderer, vorzugsweise der benachbarten Flachmateriallagen angeordnet sind.

Bevorzugt ist vorgesehen, daß das Zahnrad kreisförmig oder kreisringförmig mit einer zentralen Öffnung ausgebildet ist, wobei wiederum bevorzugt die Trennfugen radial von innen nach außen verlaufend angeordnet sind.

Weiterhin bevorzugt ist es vorgesehen, daß die einzelnen Segmente Kreisringabschnitte sind und dabei außen und/oder innen eine Verzahnung tragen, so daß im zusammen- und aufeinandergelegten Zustand-das Zahnrad entsteht. Dieses kann sowohl ein außenwie auch innenverzahntes Zahnrad oder ein sowohl eine Außen- wie auch eine Innenverzahnung tragender Zahnring sein.

Ein solcher erfindungsgemäßer Aufbau bietet beispielsweise erhebliche Vorteile bei der Bereitstellung von Innenzahnradpumpen. Während bisher der die Innenverzahnung tragende Außenring den jeweiligen Belastungen angepaßt aus einem hochwertigen metallischen Werkstoff durch Räumen mit entsprechend hohem Materialverlust hergestellt werden mußte, wird dieses Zahnrad nunmehr durch mehrere Flachmateriallagen bereitgestellt, welche ihrerseits wiederum aus Segmenten bestehen. Diese können eng ineinander verschachtelt ausgestanzt und anschließend zusammengesetzt werden. Das gleiche gilt für das mit einer Außenverzahnung versehene Innenrad.

Besonders bevorzugt kann jede Flachmateriallage aus mehr als zwei, insbesondere drei oder vier Segmenten bestehen, wobei die Trennfugen benachbarter Flachmateriallagen in etwa gleich beabstandet zueinander liegen.

Für bestimmte Anwendungsfälle kann es vorteilhaft sein, die einzelnen Flachmateriallagen im aufeinandergelegten Zustand miteinander fest zu verbinden. Für beispielsweise Außenzahnräder wird somit die notwendige Festigkeit bereitgestellt. Für andere Anwendungsfälle, beispielsweise eine Schmieröl fördernde Pumpe, kann jedoch eine Verbindung benachbarter Flachmateriallagen entbehrlich sein, da sich die einzelnen Segmente innerhalb der Flachmateriallagen im eingebauten Zustand selbst stabilisieren. Hierbei kann es vorteilhaft sein, die einzelnen Segmente der Flachmateriallagen zu Montagezwecken zunächst über Stifte miteinander zu verbinden, wobei diese Stifte anschließend wieder entfernt werden.

Für einen weiteren, bevorzugten Anwendungsfall können die einzelnen Flachmateriallagen im zusammengesetzten Zustand nockenförmig ausgebildet sein, wobei die Gesamtheit der Flachmateriallagen im aufeinandergelegten Zustand den erfindungsgemäßen Steuernocken für die Gaswechselventilsteuerung einer Hubkolben-Brennkraftmaschine bildet.

Hierbei kann vorgesehen werden, daß die einzelnen Segmente einer Flachmateriallage nicht identisch, wie etwa im Falle des zuvor beschriebenen Zahnrades, ausgebildet sind.

Ein erfindungsgemäßes Herstellverfahren für ein solches Zahnrad bzw. einen solchen Steuernocken sieht vor, daß zunächst eine Mehrzahl von Segmenten ausgestanzt oder feingeschnitten wird und anschließend das Zahnrad bzw. der Steuemocken dadurch gebildet wird, daß durch paketieren einer bestimmten Anzahl von Segmenten zu einer Flachmateriallage und Anordnen mehrerer solcher Flachmateriallagen übereinander eine Baueinheit gebildet wird, wobei die innerhalb einer jeden Flachmateriallage zwischen den Segmenten vorhandenen Trennfugen nicht in einer Flucht übereinanderliegend angeordnet sind, sondern zumindest zwischen einigen benachbarten Flachmateriallagen versetzt zueinander liegen.

Je nach Anzahl der Segmente pro Flachmateriallage und nach Verwendungszweck des Zahnrades bzw. Steuernockens kann bei diesem Verfahren zunächst jede Flachmateriallage durch entsprechendes Zusammenlegen der Segmente gebildet werden, woraufhin anschließend durch Übereinanderlagen mehrerer solcher Flachmateriallagen das Zahnrad bzw. der Steuernocken vervollständigt wird. Es kann jedoch auf hiervon abweichend vorteilhaft sein, zunächst mehrere Segmente benachbarter Materiallagen übereinander zu stapeln und anschließend durch Anlegen weiterer Segmente die einzelnen Flachmateriallagen zu vervollständigen.

Aus produktionstechnischen Gründen kann es weiterhin vorteilhaft sein, während des Stanzens bzw. des Feinschneidens bereits zumindest eine Aufnahme für ein Verbindungsmittel in jedem Segment bereitzustellen. Somit ist es während des Paketierens möglich, die einzelnen Segmente beispielsweise auf als Zentrierstifte oder -dorne ausgebildete stabförmige Verbindungsmittel aufzufädeln. Diese stabförmigen Verbindungsmittel können zusätzlich einen Niet aufnehmen, welcher anschließend den Zusammenhalt der Flachmaterialien bewirkt oder können selbst als Niet ausgebildet sein, so daß das Verbindungsmittel zunächst für das Paketieren genutzt wird und anschließend dauerhaft in dem Zahnrad bzw. Steuernocken für dessen Zusammenhalt verbleibt.

Weitere Vorteile und Merkmale der Erfindung ergeben sich aus den abhängigen Ansprüchen und dem nachfolgend anhand einer Zeichnung näher erläuterten Ausführungsbeispiel.

Es zeigen:
- Fig. 1: perspektivisch ein als Außenzahnrad ausgebildetes Zahnrad aus mehreren Flachmateriallagen vor dem Aufeinanderlegen,
- Fig. 2: perspektivisch ein als Innenzahnrad ausgebildetes Zahnrad im montierten Zustand,
- Fig. 3: ein erfindungsgemäßer Steuemocken,
- Fig. 4: perspektivisch die Anordnung von mehreren Segmenten auf einem Materialband,
- Fig. 5: schematisch in einer Seitenansicht eine Vorrichtung zum Paketieren von Flachmateriallagen und
- Fig. 6: eine Draufsicht zu Fig. 5.

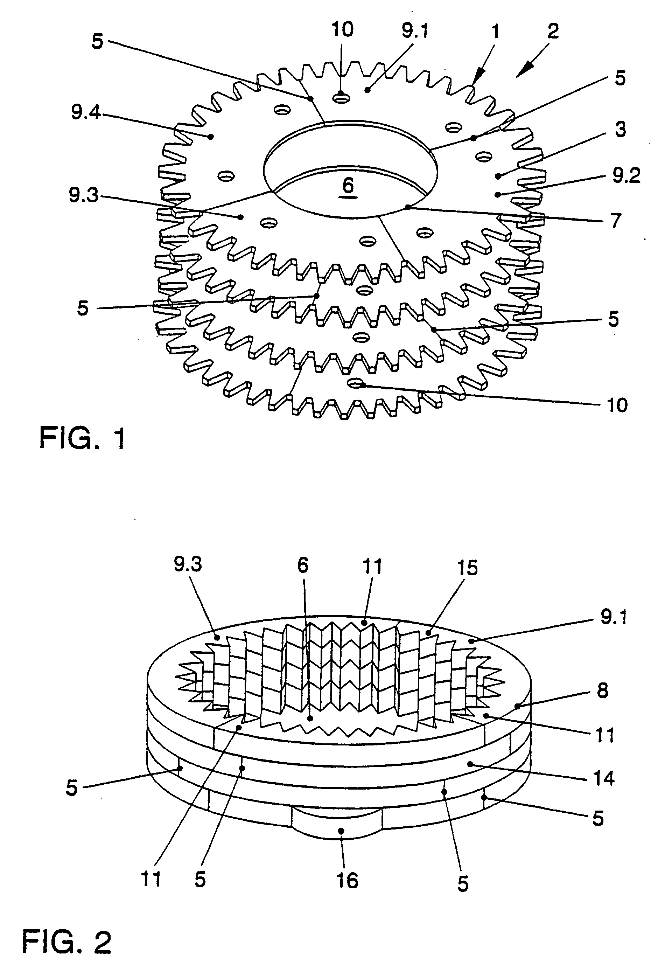

Fig. 1 zeigt eine Ausführungsform, bei der das Zahnrad als eine Außenverzahnung 1 tragendes Zahnrad 2 ausgebildet ist. Dieses Zahnrad 2 ist in seiner Gesamtheit aus einer Mehrzahl von Flachmateriallagen 3 gebildet, welche aus einem Materialband 4 ausgestanzt sind.

Die einzelnen Flachmateriallagen 3 wiederum sind mehrteilig ausgebildet, wobei Trennfugen 5 in Richtung der die Flachmateriallagen 3 im wesentlichen aufnehmenden Materiallagen-Ebenen verlaufen.

Die einzelnen Flachmateriallagen 3 weisen im zusammengelegten Zustand eine zentrale Öffnung 6 auf, von deren Öffnungsrand 7 aus sich die Trennfugen 5 im wesentlichen radial nach außen bis zu einer Außenumfangslinie 8 einer jeden Flachmateriallage 3 erstrecken.

Das Zahnrad 2 gemäß Fig. 1 weist je Flachmateriallage 3 insgesamt vier Segmente 9.1, 9.2, 9.3 und 9.4 auf, welche im zusammengelegten Zustand an die Trennfugen 5 angrenzen. Erkennbar ist weiterhin, daß die Trennfugen 5 beispielsweise der obersten Flachmateriallage 3 versetzt zu den Trennfugen 5 der benachbarten Flachmateriallage 3 angeordnet sind.

Während des Stanzens der einzelnen Segmente 9.1 ... können in diesen zeitgleich als Öffnungen 10 ausgebildete Aufnahmen bereitgestellt werden, welche im zusammengelegten Zustand dieser einzelnen Segmente 9.1 ... und dem aufeinandergelegten Zustand der einzelnen Flachmateriallagen 3 eine Durchgangsöffnung zur Aufnahme eines Verbindungselementes 11, beispielsweise in Form eines Niets, bilden.

Die Ausführungsform gemäß Fig. 2 zeigt ein als Innenzahnrad ausgebildetes Zahnrad im montierten Zustand. Jede Flachmateriallage 3 ist aus sich über einen Winkelbereich von' 120° erstreckenden Segmenten 9.1, 9.2 und 9.3 gebildet. Die zentrale Öffnung 6 kann beispielsweise zur Aufnahme eines außenverzahnten Zahnrades 2 gemäß Fig. 1 verwendet werden. Die Segmente 9.1 ... gemäß Figuren 1 und 2 stellen jeweils Kreisringabschnitte 12 dar, welche auf einem ihrer Kreisbogenabschnitte 13 oder 14 eine Verzahnung 15 tragen. Im Falle des eine Außenverzahnung tragenden Zahnrades 2 gemäß Fig. 1 sind die inneren Kreisbogenabschnitte 13 glattflächig, beispielsweise zur Aufnahme einer antreibenden Welle ausgebildet, während gemäß Fig. 2 die äußeren Kreisbogenabschnitte 14 glattflächig ausgebildet sind. Soll das Zahnrad gemäß Fig. 2 beispielsweise Teil einer Innenzahnradpumpe zur Förderung von beispielsweise Öl sein, so können einzelne Segmente 9.1 ... auf ihren Kreisbögenabschnitten 14 von dieser Bogenform abweichende Vorsprünge 16 oder entsprechend ausgebildete, nicht gezeigte Einsenkungen zur Lagefixierung aufweisen.

Selbstverständlich kann das Zahnrad 2 gemäß Fig. 1 zur Bereitstellung einer drehfesten Verbindung eine von der Kreisform abweichende Öffnung 6 aufweisen.

Die Verbindung der einzelnen Flachmateriallagen untereinander kann auf jede denkbare Art und Weise erfolgen, wobei eine Möglichkeit mittels Verbindungselement 11 bereits erläutert wurde. Ebenso denkbar sind jedoch auch, je nach Anwendungsfall, Verklebungen, Laserschweißungen oder formschlüssige Verkrallungen.

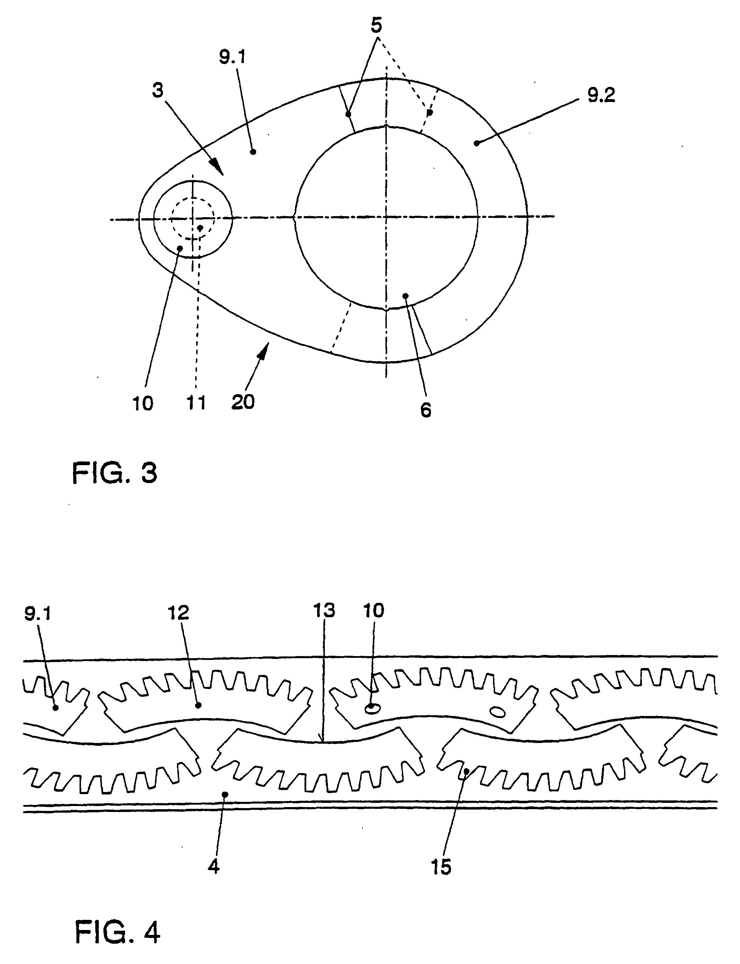

Während bei den Zahnrädern gemäß Fig. 1 und Fig. 2 die Segmente 9.1 ... vorzugsweise als identische Teile ausgebildet sind, sind die Segmente 9.1, 9.2 des Steuemockens nach Fig. 3 vorzugsweise nicht identisch ausgebildet. Fig. 3 zeigt einen erfindungsgemäßen Nocken 20 in einer Draufsicht, welcher in seiner Gesamtheit aus einer Vielzahl von ausgestanzten Flachmateriallagen 3 gebildet ist. Die in der Zeichnungsebene liegende oberste Flachmateriallage 3 weist die bzgl. des Nockenprofiles schräg verlaufende Trennfuge 5 auf, in welcher die Segmente 9.1 und 9.2 aneinandergrenzen. Durch Wenden einer jeden zweiten Flachmateriallage 3 nach dem Stanzen und vor dem Aufeinanderlegen der einzelnen Lagen, liegt die Trennfuge 5 der ersten unterhalb der Zeichnungsebene liegenden Flachmateriallage in der gestrichelt dargestellten Stellung.

Fig. 4 zeigt in stark schematischer Form ein aus beispielsweise einem Vergütungsstahl Ck 37 bestehendes Materialband 4, auf welchem die Lage von noch auszustanzenden Segmenten 9.1 ... dargestellt ist. Erkennbar ist die eng aneinanderliegende und nach Bedarf verschachtelte Anordnung der einzelnen Segmente 9.1 ... zur materialsparenden Ausnutzung des Materialbandes 4 unter weitestgehender Vermeidung von Verschnitt. Würden die Zahnräder gemäß Fig. 1 und 2 aus einstückigen Flachmateriallagen 3 gestanzt werden, so müßte das Materialband 4 mindestens so breit wie der Außendurchmesser der Zahnräder sein.

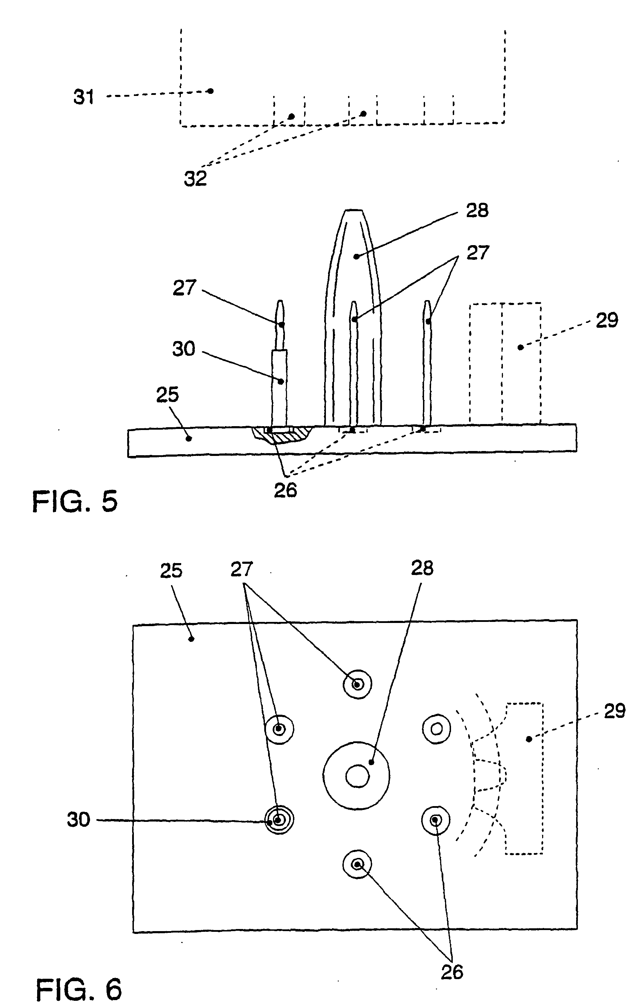

Fig. 5 zeigt eine Vorrichtung zum Paketieren mit einer Grundplatte 25, daran angeordneten Vertiefungen 26 in welche als Stifte 27 ausgebildete stabförmige Verbindungselemente 11 eingesetzt sind. Mittig ist ein in die Öffnung 6 eingreifender Zentrierdorn 28 erkennbar, während rechtsseitig optional ein in die Verzahnung 1,15 eingreifendes Ausrichtelement 29 angeordnet ist.

Die Stifte 27 können, wie in Figur 5 links dargestellt, einen Niet 30 aufnehmen, welcher die Öffnungen 10 einzelner Segmente 9.1,... durchsetzt. Alternativ können die Stifte 27 selbst als Verbindungselemente 11 dienen.

Bevorzugt werden beim Ausstanzen der einzelnen Segmente 9.1,... mehrere Öffnungen 10 derartig ausgestanzt, daß trotz des seitlichen Versatzes der Trennfugen 5 zwischen benachbarten Flachmateriallagen 3 in dem komplettierten Zahnrad bzw. Steuernocken jeweils eine Reihe von Öffnungen 10 senkrecht übereinanderliegt, vergl. Fig. 1. Oberhalb des Zentrierdornes 28 ist ein Stempel 31 erkennbar, dessen einzelne Stempelköpfe 32 den Stiften 27 bzw. den Nieten 30 zugeordnet sind.

Die Erfindung bietet weiterhin den Vorteil, daß Änderungen an dem Zahnrad bzw. Steuemocken auf vergleichsweise einfache Art und Weise durchgeführt werden können. Änderungen bezüglich der Verzahnungen bzw. der Nockenkonturen können in einfacher Weise durch Austauschen des Stanzwerkzeuges bewerkstelligt werden. Desweiteren ist durch geeignete Werkstoffwahl für das Materialband 4 und durch Feinschneiden und das anschließende Paketieren das Zahnrad bzw. der Steuernocken fertiggestellt, ohne daß weitere Nacharbeit erforderlich wäre.

## Patentansprüche

1. Steuernocken für eine Gaswechselventlisteuerung einer Hubkolben-Brennkraftmaschine bestehend aus mehreren ausgestanzten oder feingeschnittenen, aufeinandergelegten Flachmateriallagen (3), **dadurch gekennzeichnet, daß** die Flachmateriallagen (3) mehrteilig mit in Richtung der Materiallagenebenen verlaufenden Trennfugen (5) ausgebildet sind und zumindest einige dieser Trennfugen (5) benachbarter Flachmateriallagen (3) zueinander versetzt angeordnet sind.

2. Steuemocken nach Anspruch 1, **dadurch gekennzeichnet, daß** die Trennfugen (5) geradlinig verlaufen.

3. Steuemocken nach Anspruch 1 oder 2, **dadurch gekennzeichnet, daß** die Flachmateriallagen (3) im zusammengelegten Zustand eine zentrale Öffnung (6) aufweisen und sich die Trennfugen (5) im wesentlichen radial von deren Öffnungsrand (7) bis zu einer Außenumfangslinie (8) der Flachmateriallage (3) erstrecken.

4. Steuernocken nach einem oder mehreren der vorhergehenden Ansprüche, **dadurch gekennzeichnet, daß** die Trennfuge (5) einer Flachmateriallage (3) derart angeordnet ist, daß sie in beide Umfangsrichtungen in etwa gleich beabstandet zu der Trennfuge (5) einer benachbarten Flachmateriallage (3) liegt.

5. Steuernocken nach einem oder mehreren der vorhergehenden Ansprüche 1 bis 3, **dadurch gekennzeichnet, daß** die Flachmateriallagen (3) im zusammengelegten Zustand eine zentrale Öffnung (6) aufweisen und sich mehr als zwei, insbesondere drei oder vier, Trennfugen (5) von dieser Öffnung (6) aus radial nach außen erstrecken.

6. Steuemocken nach Anspruch 5, **dadurch gekennzeichnet, daß** die Trennfugen (5) abstandsgleich innerhalb der einzelnen Flachmateriallagen (3) angeordnet sind und die zwischen den Trennfugen (5) liegenden, die einzelnen Flachmateriallagen (3) bildenden Segmente (9.1, 9.2, 9.3, 9.4) identisch ausgebildet sind.

7. Steuernocken nach einem oder mehreren der vorhergehenden Ansprüche, **dadurch gekennzeichnet, daß** jedes durch die Mehrteiligkeit bedingte Segment (9.1, ...) einer Flachmateriallage (3) separat mit einem Segment (9.1, ...) einer benachbarten Flachmateriallage (3) verbunden ist.

8. Steuernocken nach Anspruch 7, **dadurch gekennzeichnet, daß** jedes Segment (9.1, ...) mindestens eine durch das Stanzen oder Feinschneiden bereitgestellte Öffnung (10) zur Aufnahme eines Verbindungselementes (11) aufweist.

9. Verfahren zum Herstellen eines aus mehreren Flachmateriallagen (3) bestehenden Steuemockens für eine Gaswechselventlisteuerung einer Hubkolben-Brennkraftmaschine mit den Schritten
a) Ausstanzen oder Feinschneiden einer Mehrzahl von Segmenten (9.1, ...) aus einem Materialband (4),
b) Paketieren einer bestimmten Anzahl von Segmenten (9.1, ...) derartig, daß
b1) aus mehreren Segmenten (9.1, ...) eine Flachmateriallage (3) entsteht, mit zwischen den Segmenten (9.1, ...) verlaufenden Trennfugen (5),
b2) aus mehreren Fiachmateriallagen (3) aufeinandergelegt der Steuernocken gebildet wird, wobei die einzelnen Flachmateriallagen (3) so relativ zueinander positioniert werden, daß Trennfugen (5) zumindest einiger benachbarter Flachmateriallagen (3) versetzt zueinander liegen.

10. Verfahren nach Anspruch 9, **dadurch gekennzeichnet, daß** im Schritt b) zunächst b1) und danach b2) durchgeführt wird.

11. Verfahren nach Anspruch 9, **dadurch gekennzeichnet, daß** benachbarte Flachmateriallagen (3) durch ein Verbindungselement (11) zumindest zeitweise miteinander verbunden werden.

12. Verfahren nach Anspruch 11, **dadurch gekennzeichnet, daß** im Schritt a) in einzelnen Segmenten (9.1, ...) zumindest eine Aufnahme für das Verbindungselement (11) hergestellt wird und im Schritt b) das Paketieren durch auffädeln der Segmente (9.1, ...) mit ihren Aufnahmen auf stabförmige Verbindungselemente (11) erfolgt.

13. Verfahren nach Anspruch 12, **dadurch gekennzeichnet, daß** die Verbindungselemente (11) dauerhaft im Steuemocken verbleiben.

14. Zahnrad bestehend aus mehreren ausgestanzten oder feingeschnittenen, aufeinandergelegten Flachmateriallagen (3), **dadurch gekennzeichnet, daß** die Flachmateriallagen (3) mehrteilig mit in Richtung der Materiallagenebenen verlaufenden Trennfugen (5) ausgebildet sind und zumindest einige dieser Trennfugen (5) benachbarter Flachmateriallagen (3) zueinander versetzt angeordnet sind.

15. Zahnrad nach Anspruch 14, **dadurch gekennzeichnet, daß** die Trennfugen (5) geradlinig verlaufen.

16. Zahnrad nach Anspruch 14 oder 15, **dadurch gekennzeichnet, daß** die Flachmateriallagen (3) im zusammengelegten Zustand eine zentrale Öffnung (6) aufweisen und sich die Trennfugen (5) im wesentlichen radial von deren Öffnungsrand (7) bis zu einer Außenumfangslinie (8) der Flachmateriallage (3) erstrecken.

17. Zahnrad nach einem oder mehreren der Ansprüche 14 bis 16, **dadurch gekennzeichnet, daß** die Trennfuge (5) einer Flachmateriallage (3) derart angeordnet ist, daß sie in beide Umfangsrichtungen in etwa gleich beabstandet zu der Trennfuge (5) einer benachbarten Flachmateriallage (3) liegt.

18. Zahnrad nach einem oder mehreren der Ansprüche 14 bis 16, **dadurch gekennzeichnet, daß** die Flachmateriallagen (3) im zusammengelegten Zustand eine zentrale Öffnung (6) aufweisen und sich mehr als zwei, insbesondere drei oder vier, Trennfugen (5) von dieser Öffnung (6) aus radial nach außen erstrecken.

19. Zahnrad nach Anspruch 18, **dadurch gekennzeichnet, daß** die Trennfugen (5) abstandsgleich innerhalb der einzelnen Flachmateriallagen (3) angeordnet sind und die zwischen den Trennfugen (5) liegenden, die einzelnen Flachmateriallagen (3) bildenden Segmente (9.1, 9.2, 9.3, 9.4) identisch ausgebildet sind.

20. Zahnrad nach einem oder mehreren der Ansprüche 14 bis 19, **dadurch gekennzeichnet, daß** jedes durch die Mehrteiligkeit bedingte Segment (9.1, ...) einer Flachmateriallage (3) separat mit einem Segment (9.1, ...) einer benachbarten Flachmateriallage (3) verbunden ist.

21. Zahnrad nach Anspruch 20, **dadurch gekennzeichnet, daß** jedes Segment (9.1, ...) mindestens eine durch das Stanzen oder Feinschneiden bereitgestellte Öffnung (10) zur Aufnahme eines Verbindungselementes (11) aufweist.

22. Zahnrad nach Anspruch 20, **dadurch gekennzeichnet, daß** die Segmente (9.1, ...) Kreisringabschnitte (12) bilden und zwischen den diese Segmente (9.1, ...) begrenzenden Trennfugen (5) Verzahnungen (15) tragen.

23. Zahnrad nach Anspruch 22, **dadurch gekennzeichnet, daß** die Verzahnung (15) nach innen weisend angeordnet ist und die nach außen weisenden Kreisbogenabschnitte (14) glattflächig ausgebildet sind.

24. Verfahren zum Herstellen eines aus mehreren Flachmateriallagen (3) bestehenden Zahnrades für eine Gaswechselventlisteuerung einer Hubkolben-Brennkraftmaschine mit den Schritten
a) Ausstanzen oder Feinschneiden einer Mehrzahl von Segmenten (9.1, ...) aus einem Materialband (4),
b) Paketieren einer bestimmten Anzahl von Segmenten (9.1, ...) derartig, daß
b1) aus mehreren Segmenten (9.1, ...) eine Flachmateriallage (3) entsteht, mit zwischen den Segmenten (9.1, ...) verlaufenden Trennfugen (5).
b2) aus mehreren Flachmateriallagen (3) aufeinandergelegt das Zahnrad gebildet wird, wobei die einzeinen Flachmateriallagen (3) so relativ zueinander positioniert werden, daß Trennfugen (5) zumindest einiger benachbarter Flachmateriallagen (3) versetzt zueinander liegen.

25. Verfahren nach Anspruch 24, **dadurch gekennzeichnet, daß** im Schritt b) zunächst b1) und danach b2) durchgeführt wird.

26. Verfahren nach Anspruch 24, **dadurch gekennzeichnet, daß** benachbarte Flachmateriallagen (3) durch ein Verbindungselement (11) zumindest zeitweise miteinander verbunden werden.

27. Verfahren nach Anspruch 26, **dadurch gekennzeichnet, daß** im Schritt a) in einzelnen Segmenten (9.1, ...) zumindest eine Aufnahme für das Verbindungselement (11) hergestellt wird und im Schritt b) das Paketieren durch auffädeln der Segmente (9.1, ...) mit ihren Aufnahmen auf stabförmige Verbindungselemente (11) erfolgt.

28. Verfahren nach Anspruch 27, **dadurch gekennzeichnet, daß** die Verbindungselemente (11) dauerhaft im Zahnrad verbleiben.

## Claims

1. Radial cam for a gas exchange valve control system of a reciprocating piston internal combustion engine consisting of a plurality of stamped-out or finely cut flat material layers (3) which are placed one on top of the other, **characterised in that** the flat material layers (3) are formed in multiple parts with partition lines (5) extending in the direction of the material layer planes, and at least some of these partition lines (5) of adjacent flat material layers (3) are disposed offset with respect to each other.

2. Radial cam according to claim 1, **characterised in that** the partition lines (5) extend in a linear manner.

3. Radial cam according to claim 1 or 2, **characterised in that** the flat material layers (3) comprise a central orifice (6) when they are placed together and the partition lines (5) extend substantially radially from the orifice edge (7) thereof to an outer peripheral line (8) of the flat material layer (3).

4. Radial cam according to any one or several of the preceding claims, **characterised in that** the partition line (5) of a flat material layer (3) is arranged in such a manner that it lies in both peripheral directions at approximately the same spaced interval with respect to the partition line (5) of an adjacent flat material layer (3).

5. Radial cam according to any one or several of the preceding claims 1 to 3, **characterised in that** the flat material layers (3) comprise a central orifice (6) when they are placed together and more than two, in particular three or four, partition lines (5) extend radially outwards from this orifice (6).

6. Radial cam according to claim 5, **characterised in that** the partition lines (5) are disposed equally spaced apart within the individual flat material layers (3) and the segments (9.1, 9.2, 9.3, 9.4) which lie between the partition lines (5) and form the individual flat material layers (3) are identical.

7. Radial cam according to any one or several of the preceding claims, **characterised in that** each segment (9.1,...) of a flat material layer (3), which segment is determined by the multiple-part formation, is separately connected to a segment (9.1,...) of an adjacent flat material layer (3).

8. Radial cam according to claim 7, **characterised in that** each segment (9.1,...) comprises at least one orifice (10), which is provided by stamping or fine-cutting, for the purpose of accommodating a connection element (11).

9. Method of producing a radial cam, which consists of a plurality of flat material layers (3), for a gas exchange valve control system of a reciprocating piston internal combustion engine, comprising the steps of:
a) stamping out or finely cutting a plurality of segments (9.1, ...) from a material strip (4),
b) packing a predetermined number of segments (9.1,...) in such a manner that
b1) a plurality of segments (9.1, ...) serves to produce a flat material layer (3), comprising partition lines (5) extending between the segments (9.1,...)
b2) a plurality of flat material layers (3) placed one on top of the other serves to form the radial cam, wherein the individual flat material layers (3) are positioned relative to each other such that partition lines (5) of at least some adjacent flat material layers (3) lie offset with respect to each other.

10. Method according to claim 9, **characterised in that** in step b), b1) is carried out first followed by b2).

11. Method according to claim 9, **characterised in that** adjacent flat material layers (3) are connected to each other at least temporarily by means of a connection element (11).

12. Method according to claim 11, **characterised in that** in step a) at least one receptacle for the connection element (11) is produced in individual segments (9.1,...), and in step b) the packing procedure is performed by lining up the segments (9.1,...) and their receptacles with bar-shaped connection elements (11).

13. Method according to claim 12, **characterised in that** the connection elements (11) remain permanently in the radial cam.

14. Toothed wheel consisting of a plurality of stamped-out or finely cut flat material layers (3) which are placed one on top of the other, **characterised in that** the flat material layers (3) are formed in multiple parts with partition lines (5) extending in the direction of the material layer planes, and at least some of these partition lines (5) of adjacent flat material layers (3) are disposed offset with respect to each other.

15. Toothed wheel according to claim 14, **characterised in that** the partition lines (5) extend in a linear manner.

16. Toothed wheel according to claim 14 or 15, **characterised in that** the flat material layers (3) comprise a central orifice (6) when they are placed together and the partition lines (5) extend substantially radially from the orifice edge (7) thereof to an outer peripheral line (8) of the flat material layer (3).

17. Toothed wheel according to any one or several of the claims 14 to 16, **characterised in that** the partition line (5) of a flat material layer (3) is arranged in such a manner that it lies in both peripheral directions at approximately the same spaced interval with respect to the partition line (5) of an adjacent flat material layer (3).

18. Toothed wheel according to any one or several of the claims 14 to 16, **characterised in that** the flat material layers (3) comprise a central orifice (6) when they are placed together and more than two, in particular three or four, partition lines (5) extend radially outwards from this orifice (6).

19. Toothed wheel according to claim 18, **characterised in that** the partition lines (5) are disposed equally spaced apart within the individual flat material layers (3) and the segments (9.1, 9.2, 9.3, 9.4) which lie between the partition lines (5) and form the individual flat material layers (3) are identical.

20. Toothed wheel according to any one or several of the claims 14 to 19, **characterised in that** each segment (9.1,...) of a flat material layer (3), which segment is determined by the multiple-part formation, is separately connected to a segment (9.1, ...) of an adjacent flat material layer (3).

21. Toothed wheel according to claim 20, **characterised in that** each segment (9.1, ...) comprises at least one orifice (10), which is provided by stamping or fine-cutting, for the purpose of accommodating a connection element (11).

22. Toothed wheel according to claim 20, **characterised in that** the segments (9.1,...) form circular ring portions (12) and support toothing arrangements (15) between the partition lines (5) which define these segments (9.1,...).

23. Toothed wheel according to claim 22, **characterised in that** the toothing arrangement (15) is disposed pointing inwards and the outwardly pointing circular arc portions (14) are formed with a smooth surface.

24. Method of producing a toothed wheel, which consists of a plurality of flat material layers (3), for a gas exchange valve control system of a reciprocating piston internal combustion engine, comprising the steps of:
c) stamping out or finely cutting a plurality of segments (9.1, ...) from a material strip (4),
d) packing a predetermined number of segments (9.1,...) in such a manner that
b1) a plurality of segments (9.1, ...) serves to produce a flat material layer (3), comprising partition lines (5) extending between the segments (9.1,...)
b2) a plurality of flat material layers (3) placed one on top of the other serves to form the toothed wheel, wherein the individual flat material layers (3) are positioned relative to each other such that partition lines (5) of at least some adjacent flat material layers (3) lie offset with respect to each other.

25. Method according to claim 24, **characterised in that** in step b), b1) is carried out first followed by b2).

26. Method according to claim 24, **characterised in that** adjacent flat material layers (3) are connected to each other at least temporarily by means of a connection element (11).

27. Method according to claim 26, **characterised in that** in step a) at least one receptacle for the connection element (11) is produced in individual segments (9.1,...), and in step b) the packing procedure is performed by lining up the segments (9.1,...) and their receptacles with rod-shaped connection elements (11).

28. Method according to claim 27, **characterised in that** the connection elements (11) remain permanently in the toothed wheel.

## Revendications

1. Came de commande destinée à une commande de soupape de distribution de gaz d'un moteur à combustion interne à pistons alternatifs, constituée de plusieurs couches de matériau plat (3) estampées ou découpées avec précision, et superposées, **caractérisée en ce que** les couches de matériau plat (3) sont réalisées en plusieurs parties et comportent des joints de séparation (5) s'étendant en direction des plans des couches de matériau, et **en ce qu'**au moins certains de ces joints de séparation (5) de couches de matériau plat (3) voisines sont décalés les uns par rapport aux autres.

2. Came de commande selon la revendication 1, **caractérisée en ce que** les joints de séparation (5) s'étendent en ligne droite.

3. Came de commande selon la revendication 1 ou 2, **caractérisée en ce qu'**à l'état assemblé, les couches de matériau plat (3) comportent un orifice central (6), et **en ce qu'**à partir du bord (7) de cet orifice, les joints de séparation (5) s'étendent pour l'essentiel radialement jusqu'à une ligne de contour extérieur (8) de la couche de matériau plat (3).

4. Came de commande selon l'une ou plusieurs des revendications précédentes, **caractérisée en ce que** le joint de séparation (5) d'une couche de matériau plat (3) est disposé de telle sorte que, dans les deux directions périphériques, il soit situé à un écartement sensiblement identique du joint de séparation (5) d'une couche de matériau plat (3) voisine.

5. Came de commande selon l'une ou plusieurs des revendications précédentes 1 à 3, **caractérisée en ce qu'**à l'état assemblé, les couches de matériau plat (3) comportent un orifice central (6), et **en ce que** plus de deux joints de séparation (5), notamment trois ou quatre, s'étendent radialement vers l'extérieur à partir de cet orifice (6).

6. Came de commande selon la revendication 5, **caractérisée en ce que** les joints de séparation (5) sont disposés à un écartement identique à l'intérieur des différentes couches de matériau plat (3), et **en ce que** les segments (9.1, 9.2, 9.3, 9.4) situés entre les joints de séparation (5), qui forment les différentes couches de matériau plat (3), sont agencés de façon identique.

7. Came de commande selon l'une ou plusieurs des revendications précédentes, **caractérisée en ce que** chaque segment (9.1, ...) conditionné par la pluralité des parties d'une couche de matériau plat (3) est relié séparément à un segment (9.1, ...) d'une couche de matériau plat (3) voisine.

8. Came de commande selon la revendication 7, **caractérisée en ce que** chaque segment (9.1, ...) comporte au moins un orifice (10) réalisé par estampage ou découpe de précision, qui est destiné à la réception d'un élément de liaison (11).

9. Procédé de fabrication d'une came de commande constituée de plusieurs couches de matériau plat (3), destiné à une commande de soupape de distribution de gaz d'un moteur à combustion interne à pistons alternatifs, comportant les phases suivantes
a) estampage ou découpe de précision d'une pluralité de segments (9.1, ...) à partir d'une bande (4) de matériau,
b) mise en paquet d'un certain nombre de segments (9.1, ...) de telle sorte que
b1) une couche de matériau plat (3) soit engendrée à partir de plusieurs segments (9.1, ...), avec des joints de séparation (5) s'étendant entre les segments (9.1, ...),
b2) la came de commande soit engendrée à partir de plusieurs couches de matériau plat (3) superposées, les différentes couches de matériau plat (3) étant positionnées les unes par rapport aux autres de telle sorte que des joints de séparation (5), d'au moins certaines couches voisines de matériau plat (3), soient décalés les uns par rapport aux autres.

10. Procédé selon la revendication 9, **caractérisé en ce que** dans la phase b), la phase b1) est d'abord exécutée, et ensuite la phase b2).

11. Procédé selon la revendication 9, **caractérisé en ce que** des couches de matériau plat (3) voisines sont reliées entre elles, au moins temporairement, par un élément de liaison (11).

12. Procédé selon la revendication 11, **caractérisé en ce qu'**au cours de la phase a), au moins une réception pour l'élément de liaison (11) est réalisée dans différents segments (9.1, ...), et **en ce qu'**au cours de la phase b), la mise en paquet est effectuée par l'enfilage des segments (9.1, ...) par leurs réceptions sur des éléments de liaison (11) en forme de barre.

13. Procédé selon la revendication 12, **caractérisé en ce que** les éléments de liaison (11) restent en permanence dans la came de commande.

14. Roue dentée constituée de plusieurs couches de matériau plat (3) estampées ou découpées avec précision, et superposées, **caractérisée en ce que** les couches de matériau plat (3) sont réalisées en plusieurs parties et comportent des joints de séparation (5) s'étendant dans la direction des plans des couches de matériau, et **en ce qu'**au moins certains de ces joints de séparation (5) de couches de matériau plat (3) voisines sont décalés les uns par rapport aux autres.

15. Roue dentée selon la revendication 14, **caractérisée en ce que** les joints de séparation (5) s'étendent en ligne droite.

16. Roue dentée selon la revendication 14 ou 15, **caractérisée en ce qu'**à l'état assemblé, les couches de matériau plat (3) comportent un orifice central (6), et **en ce qu'**à partir du bord (7) de cet orifice, les joints de séparation (5) s'étendent pour l'essentiel radialement jusqu'à une ligne de contour extérieur (8) de la couche de matériau plat (3).

17. Roue dentée selon l'une ou plusieurs des revendications 14 à 16, **caractérisée en ce que** le joint de séparation (5) d'une couche de matériau plat (3) est disposé de telle sorte que, dans les deux directions périphériques, il soit situé à un écartement sensiblement identique du joint de séparation (5) d'une couche de matériau plat (3) voisine.

18. Roue dentée selon l'une ou plusieurs des revendications 14 à 16, **caractérisée en ce qu'**à l'état assemblé, les couches de matériau plat (3) comportent un orifice central (6), et **en ce que** plus de deux joints de séparation (5), notamment trois ou quatre, s'étendent radialement vers l'extérieur à partir de cet orifice (6).

19. Roue dentée selon la revendication 18, **caractérisée en ce que** les joints de séparation (5) sont disposés à un écartement identique à l'intérieur des différentes couches de matériau plat (3), et **en ce que** les segments (9.1, 9.2, 9.3, 9.4) situés entre les joints de séparation (5), qui forment les différentes couches de matériau plat (3), sont agencés de façon identique.

20. Roue dentée selon l'une ou plusieurs des revendications 14 à 19, **caractérisée en ce que** chaque segment (9.1, ...) conditionné par la pluralité des parties d'une couche de matériau plat (3) est relié séparément à un segment (9.1, ...) d'une couche de matériau plat (3) voisine.

21. Roue dentée selon la revendication 20, **caractérisée en ce que** chaque segment (9.1, ...) comporte au moins un orifice (10) réalisé par estampage ou découpe de précision, qui est destiné à la réception d'un élément de liaison (11).

22. Roue dentée selon la revendication 20, **caractérisée en ce que** les segments (9.1, ...) forment des segments d'anneau de cercle (12), et comportent des dentures (15) entre les joints de séparation (5) délimitant ces segments (9.1, ...).

23. Roue dentée selon la revendication 22, **caractérisée en ce que** la denture (15) est disposée en étant orientée vers l'intérieur, et **en ce que** les segments d'anneau de cercle (14) orientés vers l'extérieur sont agencés avec une surface lisse.

24. Procédé de fabrication d'une roue dentée constituée de plusieurs couches de matériau plat (3), destiné à une commande de soupape de distribution de gaz d'un moteur à combustion interne à pistons alternatifs, comportant les phases suivantes
a) estampage ou découpe de précision d'une pluralité de segments (9.1, ...) à partir d'une bande (4) de matériau,
b) mise en paquet d'un certain nombre de segments (9.1, ...) de telle sorte que
b1) une couche de matériau plat (3) soit engendrée à partir de plusieurs segments (9.1, ...), avec des joints de séparation (5) s'étendant entre les segments (9.1, ...),
b2) la roue dentée soit engendrée à partir de plusieurs couches de matériau plat (3) superposées, les différentes couches de matériau plat (3) étant positionnées les unes par rapport aux autres de telle sorte que des joints de séparation (5), d'au moins certaines couches voisines de matériau plat (3), soient décalés les uns par rapport aux autres.

25. Procédé selon la revendication 24, **caractérisé en ce que** dans la phase b), la phase b1) est d'abord exécutée, et ensuite la phase b2).

26. Procédé selon la revendication 24, **caractérisé en ce que** des couches de matériau plat (3) voisines sont reliées entre elles, au moins temporairement, par un élément de liaison (11).

27. Procédé selon la revendication 26, **caractérisé en ce qu'**au cours de la phase a), au moins une réception pour l'élément de liaison (11) est réalisée dans différents segments (9.1, ...), et **en ce qu'**au cours de la phase b), la mise en paquet est effectuée par l'enfilage des segments (9.1, ...) par leurs réceptions sur des éléments de liaison (11) en forme de barre.

28. Procédé selon la revendication 27, **caractérisé en ce que** les éléments de liaison (11) restent en permanence dans la roue dentée.
